# EUROPÄISCHE PATENTSCHRIFT

(11) **EP 0 928 508 B1**
(45) Veröffentlichungstag und Bekanntmachung des Hinweises auf die Patenterteilung: **17.12.2003**
(21) Anmeldenummer: 97910251.4
(22) Anmeldetag: 26.09.1997
(51) Int. Cl.: H02B 11/133

(54) **ABSCHLIESSEINRICHTUNG GEGEN BETÄTIGUNG EINES FAHRANTRIEBES EINES LEISTUNGSSCHALTERS**
LOCKING DEVICE TO PREVENT ACTUATION OF POWER CIRCUIT BREAKER TRAVELLING MECHANISM
DISPOSITIF DE VERROUILLAGE CONTRE L'ACTIONNEMENT DE L'ORGANE DE TRANSLATION D'UN DISJONCTEUR

(30) Priorität: 27.09.1996 DE 19641513
(43) Veröffentlichungstag der Anmeldung: 14.07.1999
(73) Patentinhaber: SIEMENS AKTIENGESELLSCHAFT, 80333 München (DE)
(72) Erfinder: LIEBETRUTH, Marc, D-13465 Berlin (DE)
(86) Internationale Anmeldenummer: DE9702273
(87) Internationale Veröffentlichungsnummer: WO98013915

(56) Entgegenhaltungen:
- WO-A-91/03088
- DE-A- 3 908 056
- DE-U- 8 704 770
- DE-U- 9 115 101
- US-A- 4 051 335

## Beschreibung

Die Erfindung betrifft eine Abschließeinrichtung zur Sperrung der Betätigung eines Fahrantriebes eines in einem Einschubrahmen fahrbar angeordneten Leistungschalters, wobei der Fahrantrieb eine durch die Abschließeinrichtung steuerbare Sperrvorrichtung aufweist.

Eine Abschließeinrichtung dieser Art ist z. B. durch die DE 44 20 582 C2 bekanntgeworden. Dabei wirkt ein Sperrhebel mit einem Schieber zusammen, der eine Arbeitsfläche für ein Werkzeug aufweist, das zur Betätigung einer Gewindespindel des Fahrantriebes benutzt wird. Bei einer Sperrung des Schiebers gegen Verschiebung, z. B. durch ein Bugelschloß, kann das Werkzeug nicht mit der Gewindespindel in Eingriff gebracht und daher der Leistungsschalter nicht verfahren werden.

Der erwähnte Sperrhebel befindet sich bei der bekannten Abschließvorrichtung an dem Fahrantrieb, der seinerseits als Baugruppe an der Unterseite des Leistungsschalters montiert ist. Daher bedarf es einer geeigneten mechanischen Verbindung zwischen dem Sperrhebel und einer abschließbaren Vorrichtung, die an einer gut zugänglichen Stelle der Schaltanlage bzw. Schaltzelle angebracht werden kann.

Der Erfindung liegt hiervon ausgehend die Aufgabe zugrunde, eine für unterschiedliche Einbauorte gleichermaßen geeignete Abschließeinrichtung zu schaffen.

Diese Aufgabe wird gemäß der Erfindung dadurch gelöst, daß die Abschließeinrichtung ein biegsames Übertragungsorgan zur Betätigung der Sperrvorrichtung des Fahrantriebes sowie eine mit dem biegsamen Übertragungsorgan verbundene, Verschlußeinheit aufweist, die einen mit Befestigungsöffnungen versehenen Tragrahmen mit Führungsöffnungen für einen mit dem Übertragungsorgan verbundenen, von Hand bedienbaren und eine Einhängeöffnung für wenigstens ein Bügelschloß aufweisenden Sperrschieber umfaßt.

Der Tragrahmen kann mittels der Befestigungsöffnungen in verschiedenen gewünschten Positionen montiert werden, z. B. links oder rechts an dem Einschubrahmen des Leistungsschalters oder an einer Tür der Schaltanlage, in der sich der Leistungsschalter befindet. Das biegsame Übertragungsorgan, z. B. ein Bowdenzug, erlaubt dabei die Überbrückung einer gewissen Entfernung zwischen der Verschlußeinheit und der Sperrvorrichtung des Fahrantriebes. Die Verwendung biegsamer Übertragungsorgane für diese und ähnliche Zwecke ist in Schaltanlagen an sich bekannt.

Es ist bereits bekannt, Draht- bzw. Bowdenzüge für Zwecke der Verriegelung bei einschiebbaren Schaltgeräten einzusetzen. Beispielsweise ist durch die DE 27 49 003 B2 eine solche Einrichtung zur Stellungsverriegelung eines einschiebbaren Schalters mittels eines Bowdenzuges bekanntgeworden. Es ist jedoch nicht vorgesehen, eine Fahrbewegung des Schalters durch eine Abschließvorrichtung sperren zu können.

In der DE 39 08 056 ist gleichfalls eine Einrichtung zur Stellungsverriegelung eines Einschub-Leistungsschalters unter Verwendung eines Bowdenzuges beschrieben. Durch die zum Verfahren des Leistungsschalters vorgesehene Einfahrspindel wird zugleich ein im Einschubträger angeordneter Kontaktbrückenträger betätigt. Auch hier sind keine Mittel für eine abschließbare Blockierung der Einfahrspindel angegeben.

Im Rahmen der Erfindung kann die Abschließeinrichtung folgende weitere Merkmale aufweisen:
- der Tragrahmen ist U-förmig ausgebildet und weist zwei gegenüberliegende parallele Schenkel sowie einen die Schenkel verbindenden Mittelteil auf,
- die Führungsöffnungen sind in den gegenuberliegenden Schenkeln des Tragrahmen angeordnet,
- die Schenkel sind mit gegeneinander gerichteten Abkantungen versehen, und
- die Befestigungsöffnungen sind in wenigstens einem der Schenkel, in den Abkantungen der Schenkel sowie in dem Mittelteil angeordnet.

In dieser Ausgestaltung ist die Verschlußeinheit aus wenigen einfachen Stanzteilen und daher preiswert herstellbar. Durch die Anbringung der Befestigungsöffnungen werden ferner alle praktisch vorkommenden Montagearten berücksichtigt.

Nach einer weiteren Ausgestaltung der Erfindung kann dem Sperrschieber ein gleichfalls mit wenigstens einer Einhängeöffnung versehener und in weiteren Führungsöffnungen des Tragrahmens geführter Riegelschieber zugeordnet sein, wobei die Einhängeöffnung im Riegelschieber mit der Einhängeoffnung im Sperrschieber erst beim Erreichen der Sperrstellung des Sperrschiebers durch eine quer zur Betätigungsrichtung des Sperrschiebers gerichtete Verschiebung in den weiteren Führungsöffnungen zur Deckung zu bringen ist. Hierdurch wird eine völlige Unabhängigkeit der Hubes des Sperrschiebers von der Art des verwendeten Bügelschlosses erreicht. Damit können Bügelschlösser der unterschiedlichsten Art ohne Auswirkung auf die Zuverlässigkeit der Abschließeinrichtung benutzt werden.

Im Zusammenhang hiermit empfiehlt sich eine Ausbildung derart, daß der Riegelschieber zur losbaren Sicherung gegen eine Rückkehr aus der quer zur Betätigungsrichtung des Sperrschiebers verschobene Stellung in seine Ruhestellung eine zum Übergreifen einer Anschlagfläche des Tragrahmens dienende Sperrfläche besitzt. Der Benutzer kann daher zunächst den Sperrschieber und den Riegelschieber in die Position bringen, in der die Einhängeöffnungen miteinander fluchten, und kann dann das Bügelschloß einhängen.

Eine weitere Erleichterung bei der Handhabung der Abschließeinrichtung ist dadurch zu erreichen, daß der Sperrschieber und der Riegelschieber zur gemeinsamen Verschiebung durch eine Mitnehmeranordnung verbunden sind. Hierdurch wird erreicht, daß der Benutzer stets beide Schieber gemeinsam betätigen kann, egal an welchem der Schieber die Betätigungskraft ausgeübt wird.

Die erwähnte Mitnehmeranordnung kann einen Zapfen des Sperrschiebers bzw. des Riegelschiebers und einen den Zapfen gabelartig übergreifenden Hebelabschnitt des Riegelschiebers bzw. des Sperrschiebers umfassen. Dabei kann der Zapfen in besonders einfacher und zweckmaßiger Weise durch den zylindrischen Kopf einer Schraube gebildet sein.

Zu einer preiswerten Herstellbarkeit der Abschließeinrichtung kann dadurch beigetragen werden, daß der Sperrschieber und der Riegelschieber gleich ausgebildet und spiegelbildlich aufeinandergelegt sind und daß wenigstens die in einem der Schenkel des Tragrahmens befindlichen Führungsöffnungen und die weiteren Führungsöffnungen durch einen zusammenhängenden Ausschnitt des Tragrahmens gebildet sind. Es empfiehlt sich dabei, daß der Ausschnitt im Tragrahmen für den Durchtritt einer als Widerlager einer Rückstellfeder dienenden Nase des Riegelschiebers bemessen ist. Dadurch lassen sich die Schieber auf einfache Weise in dem Tragrahmen montieren.

Die Erfindung wird im folgenden anhand des in den Figuren dargestellten Ausführungsbeispieles näher erläutert.

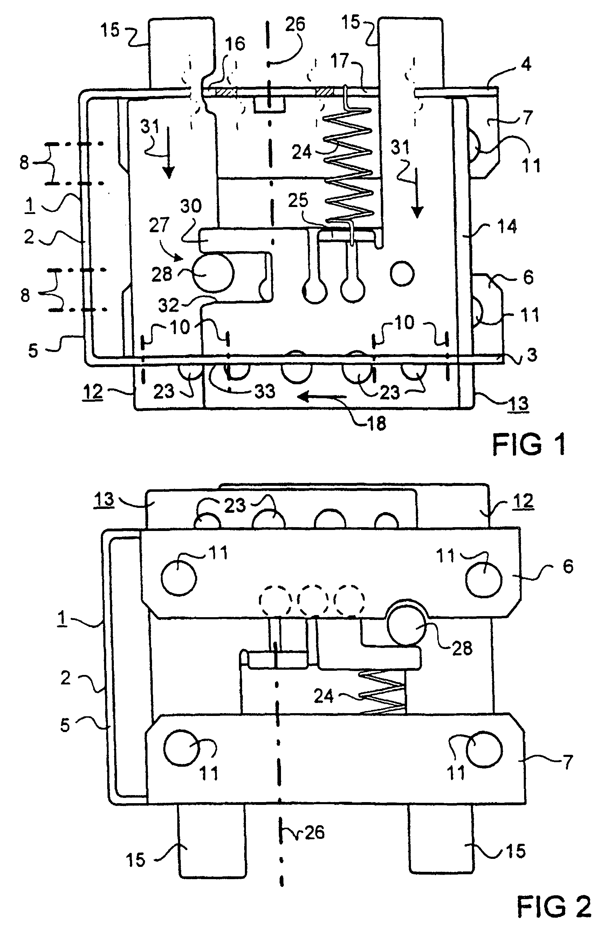

Die Figur 1 zeigt eine Verschlußeinheit einer Abschließeinrichtung in der Draufsicht.

Die Verschlußeinheit gemäß der Figur 1 ist in der Figur 2 mit Blick auf die Unterseite dargestellt.

Die Figur 3 zeigt eine Stirnansicht der Verschlußeinheit gemäß der Figur 1.

In der Figur 4 sind unterschiedliche Montagearten einer Abschließeinrichtung in Verbindung mit einem Einschubrahmen für einen Niederspannungs-Leistungsschalter veranschaulicht.

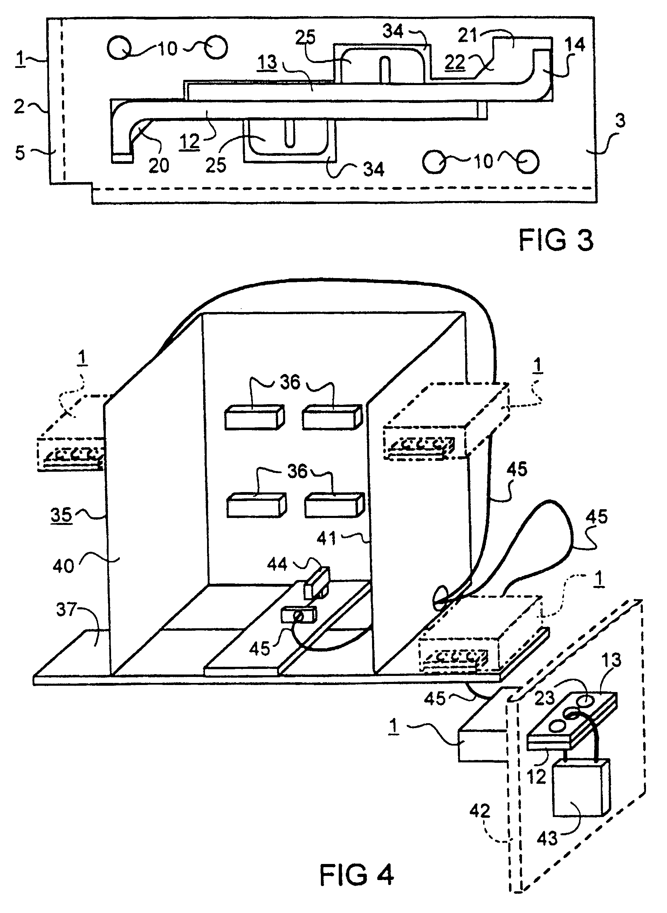

Die in den Figuren 1 und 2 gezeigte Verschlußeinheit 1 weist einen U-förmigen Tragrahmen 2 mit parallel einander gegenüberstehenden Schenkeln 3 und 4 sowie einem die Schenkel 3 und 4 verbindenden Mittelteil 5 auf. Die Schenkel 3 und 4 sind mit je einer Abkantung 6 bzw. 7 versehen, die gegeneinander gerichtet sind. Der Tragrahmen 2 ist an mehreren Stellen mit Befestigungsöffnungen versehen, um die Verschlußeinheit 1 an jeweils zur Verfügung stehenden Bauteilen einer Schaltanlage anbringen zu können. Insbesondere befinden sich in dem Mittelteil 5 durch ihre Mittellinien angedeutete Befestigungsöffnungen 8, während der bedienungsseitige Schenkel 3 mit Befestigungsöffnungen 10 (vgl. Figur 3) versehen ist. Weitere Befestigungsöffnungen 11 sind in den Abkantungen 6 und 7 angeordnet (Figur 2).

In den parallel einander gegenüberstehenden Schenkeln 3 und 4 des Tragrahmens 2 sind ein Sperrschieber 12 sowie ein Riegelschieber 13 verschiebbar geführt. Beide Schieber sind identische Teile, die spiegelbildlich aufeinander gelegt sind. Die übereinstimmenden Merkmale des Sperrschiebers 12 und des Riegelschiebers 13 sind daher in den Figuren 1, 2 und 3 mit gleichen Bezugszeichen versehen. Der Sperrschieber 12 und der Riegelschieber 13 sind im wesentlichen eben ausgebildet und besitzen am Rand eine rechtwinklige Abkantung 14. Endteile 15 der genannten Schieber sind ohne Abkantung ausgeführt und ragen durch Führungsöffnungen 16 bzw. 17 im Schenkel 4 hindurch. Während die Fuhrungsöffnung 16 der Breite des Endteiles 15 angepaßt ist, weist die Führungsöffnung 17 eine größere Breite auf, damit der Riegelschieber 13 in Richtung eines Pfeiles 18 nach links verschoben werden kann, wie dies noch erlautert wird. In der in der Figur 1 gezeigten Ruhelage liegen der Sperrschieber 12 und der Riegelschieber 13 mit Endflächen der Abkantungen 14 an dem Schenkel 4 an. In dieser Stellung ragen beide Schieber 12 und 13 durch Führungsöffnungen 20 und 21 im Schenkel 3 des Tragrahmens 2 hindurch, die den Führungsöffnungen 16 und 17 im Schenkel 4 gegenüberliegen. Wie näher der Figur 3 zu entnehmen ist, sind die Führungsöffnungen 20 und 21 durch einen zusammenhängenden Ausschnitt 22 im Schenkel 3 gebildet.

Die bedienungsseitigen Enden des Sperrschiebers 12 und des Riegelschiebers 13 sind mit Einhängeöffnungen 23 für Bugelschlösser versehen. In der Ruhelage gemäß der Figur 1 können Bügelschlösser nicht eingehängt werden, weil sich die Einhängeöffnungen 23 teilweise von dem Schenkel 3 überdeckt sind und die in den beiden Schiebern befindlichen Einhängeöffnungen 23 nicht miteinander fluchten. Diese Stellung wird durch eine Rückstellfeder 24 aufrechterhalten, die mit einem Ende an dem Schenkel 4 des Tragrahmens 2 und mit dem anderen Ende an einer Nase 25 des Riegelschiebers 13 angreift. Die entsprechende Nase 25 des in der Figur 1 unten gelegenen Sperrschiebers 12 dient zum Einhangen des Drahtseiles eines strichpunktiert angedeuten Bowdenzuges 26.

Der Sperrschieber und der Riegelschieber 13 sind durch eine insgesamt mit 27 bezeichnete Mitnehmeranordnung verbunden. Diese Mitnehmeranordnung besteht jeweils aus einem Zapfen 28 und einem gabelartig den Zapfen 28 ubergreifenden Hebelabschnitt 30. Wie näher die Figur 1 zeigt, ist die Gabelweite des Hebelteiles 30 größer als der Durchmesser des Zapfens 28 bemessen, und zwar wenigstens um die Materialdicke des Schenkels 3.

Die beschriebene Verschlußeinheit 1 hat folgende Funktion: Soll die Abschließeinrichtung aktiviert werden, so zieht hierzu der Benutzer den Sperrschieber 12 und den Riegelschieber 13 entgegen der Wirkungsrichtung der Rückstellfeder 24 in der Richtung in der Figur 1 gezeigter Pfeile 31 aus den Tragrahmen 2 heraus. Diese Bewegung wird dadurch begrenzt, daß der Zapfen 28 an dem Schenkel 3 anschlägt. Ausgehend von dieser Stellung läßt sich der Riegelschieber 13 in der Richtung des Pfeiles 18 in Figur 1 nach links verschieben, wobei eine Sperrflache 32 am Hebelteil 30 des Riegelschiebers 13 über eine Anschlagfläche 33 am Schenkel 3 geschoben werden kann. In dieser Stellung fluchten die Einhängeöffnungen 23 in den beiden Schiebern miteinander. Durch die Reibung zwischen der Sperrfläche 32 und der Anschlagfläche 33 aufgrund der Zugkraft der Rückstellfeder 24 verbleibt der Riegelschieber 13 in dieser Stellung, die durch das anschließende Einhängen eines Bügelschlosses in miteinander fluchtende Einhängeöffnungen 23 dauerhaft aufrechterhalten bleibt.

Da die Verschiebung des Riegelschiebers 13 in der Richtung des Pfeiles 18 und das Einhängen eines Bügelschlosses nur im herausgezogenen Zustand möglich sind, wird eine Absperrung der Verschlußeinheit in einer definierten Stellung des Sperrschiebers 12 unabhängig von dem Durchmesser des Schloßbugel eines Bügelschlosses erreicht. Der mit dem Sperrschieber 12 verbundene Bowdenzug 26 führt daher stets den gleichen Hub aus.

Wie die vorstehende Beschreibung erkennen läßt, besteht die Verschlußeinheit aus nur wenigen und einfach herstellbaren Teilen. Auch ist die Montage des Sperrschiebers 12 und des Riegelschiebers 13 auf einfache Weise vorzunehmen, da der in dem Schenkel 3 befindliche Ausschnitt 22 Erweiterungen 34 für den Durchtritt der Nasen 25 des Sperrschiebers 12 und des Riegelschiebers 13 aufweist.

Die Anwendung der beschriebenen Verschlußeinheit im Rahmen einer Abschließeinrichtung wird nun anhand der Figur 4 erläutert. Diese zeigt schematisch einen Einschubrahmen 35 mit Trennkontaktanordnungen 36 für einen nicht gezeigten einfahrbaren Niederspannungs-Leistungsschalter. Der Einschubrahmen 35 ruht auf einer Traverse 37 eines Schaltschrankes oder einer Schaltanlage, wie dies an sich bekannt ist. Es sind insgesamt vier Möglichkeiten zur Montage einer Verschlußeinheit 1 gemäß den Figuren 1 bis 3 dargestellt. Insbesondere ist gezeigt, daß eine Verschlußeinheit 1 an der linken Seitenwand 40 des Einschubrahmens 35 oder an der rechten Seitenwand 41 befestigt sein kann. Hierzu können entweder die Befestigungsöffnungen 8 im Mittelteil 5 des Tragrahmens 2 oder die Befestigungsöffnungen 10 im Schenkel 3 benutzt werden, wenn ein geeignetes Haltestück benutzt wird. Eine weitere Möglichkeit zur Montage der Verschlußeinheit 1 besteht in der Anbringung an der Traverse 37 neben dem Einschubrahmen 35. In diesem Fall werden die in den Abkantungen 6 und 7 des Tragrahmens 2 befindlichen Befestigungsöffnungen 11 benutzt.

Als weitere Möglichkeit zeigt die Figur 4 die Befestigung den Verschlußeinheit 1 an einer Tür 42 unter Verwendung der in dem Schenkel 3 befindlichen Befestigungsöffnungen 10. Im Bereich der Tür 42 ist die Verschlußeinheit 1 im betätigten Zustand dargestellt. Wie man erkennt, sind der Sperrschieber 12 und der Riegelschieber 13 aus dem Tragrahmen 2 herausgezogen und durch ein Bügelschloß 43 gesichert.

Die Anordnung gemäß der Figur 4 ist insbesondere zur Sperrung des Fahrantriebes des nichtgezeigten Leistungsschalters gegen Verfahren aus der Trennstellung vorgesehen. Hierzu ist am Boden des Einschubrahmens 35 ein Schwenkriegel 44 vorgesehen, der durch einen Bowdenzug 45 betatigbar ist. Dieser ist durch eine Öffnung 46 in der Seitenwand 41 des Einschubrahmens 35 nach außen geführt und mit der Verschlußeinheit 1 verbunden. Je nach der gegebenen Entfernung zwischen der Verschlußeinheit 1 und der Öffnung 46 kann es zweckmäßig sein, unterschiedlich lange Bowdenzüge 45 zu verwenden.

## Patentansprüche

1. Abschließeinrichtung zur Sperrung der Betätigung eines Fahrantriebes eines in einem Einschubrahmen (35) fahrbar angeordneten Leistungschalters, wobei der Fahrantrieb eine durch die Abschließeinrichtung steuerbare Sperrvorrichtung aufweist,
**dadurch gekennzeichnet, daß**
die Abschließeinrichtung ein biegsames Übertragungsorgan (26, 45) zur Betätigung der Sperrvorrichtung des Fahrantriebes sowie eine mit dem biegsamen Übertragungsorgan (26, 45) verbundene, Verschlußeinheit (1) aufweist, die einen mit Befestigungsöffnungen (8, 10, 11) versehenen Tragrahmen (2) mit Führungsöffnungen (16, 20) für einen mit dem Übertragungsorgan (26, 45) verbundenen, von Hand bedienbaren und eine Einhängeöffnung (23) für wenigstens ein Bügelschloß (43) aufweisenden Sperrschieber (12) umfaßt.

2. Abschließeinrichtung nach Ansprüch 1,
**dadurch gekennzeichnet, daß**
- der Tragrahmen (1) U-förmig ausgebildet ist und zwei gegenüberliegende parallele Schenkel (3, 4) sowie einen die Schenkel (3, 4) verbindenden Mittelteil (5) aufweist,
- die Führungsöffnungen (16, 20) in den gegenüberliegenden Schenkeln (3, 4) des Tragrahmens (2) angeordnet sind,
- die Schenkel (3, 4) mit gegeneinandergerichteten Abkantungen (6, 7) versehen sind, und
- die Befestigungsöffnungen (8, 10, 11) in wenigstens einem der Schenkel (3, 4), in den Abkantungen (6, 7) der Schenkel (3, 4) sowie in dem Mittelteil (5) angeordnet ist.

3. Abschließeinrichtung nach Anspruch 1 oder 2,
**dadurch gekennzeichnet, daß**
dem Sperrschieber (12) ein gleichfalls mit wenigstens einer Einhangeöffnung (23) versehener und in weiteren Führungsöffnungen (17, 21) des Tragrahmens (2) geführter Riegelschieber (13) zugeordnet ist, wobei die Einhängeöffnung (23) im Riegelschieber (13) mit der Einhängeöffnung (23) im Sperrschieber (12) erst beim Erreichen der Sperrstellung des Sperrschiebers (12) durch eine quer zur Betätigungsrichtung des Sperrschiebers (12) gerichtete Verschiebung in den weiteren Führungsoffnungen (17, 21) zur Deckung zu bringen ist.

4. Abschließeinrichtung nach Anspruch 2,
**dadurch gekennzeichnet, daß**
der Riegelschieber (13) zur lösbaren Sicherung gegen eine Rückkehr aus der quer zur Betätigungsrichtung des Sperrschiebers (12) verschobenen Stellung in seine Ruhestellung eine zum Übergreifen einer Anschlagfläche (33) des Tragrahmens (2) dienende Sperrfläche (32) besitzt.

5. Abschließeinrichtung nach Anspruch 4,
**dadurch gekennzeichnet, daß**
der Sperrschieber (12) und der Riegelschieber (13) zur gemeinsamen Verschiebung durch eine Mitnehmeranordnung (27) verbunden sind.

6. Abschließeinrichtung nach Anspruch 5,
**dadurch gekennzeichnet, daß** die Mitnehmeranordnung (27) einen Zapfen (28) des Sperrschiebers (12) bzw. des Riegelschiebers (13) und einen den Zapfen (27) gabelartig übergreifenden Hebelabschnitt (30) des Riegelschiebers (13) bzw. des Sperrschiebers (12) umfaßt.

7. Abschließeinrichtung nach Anspruch 6,
**dadurch gekennzeichnet, daß**
der Sperrschieber (12) und der Riegelschieber (13) gleich ausgebildet und spiegelbildlich aufeinandergelegt sind und daß wenigstens die in einem der Schenkel (3) des Tragrahmens (2) befindliche Führungsöffnung (20) fur den Sperrschieber (12) und die weitere Führungsoffnung (21) für den Riegelschieber (13) durch einen zusammenhangenden Ausschnitt (22) des betreffenden Schenkels (3) Tragrahmen (2) gebildet, sind.

8. Abschließeinrichtung nach Anspruch 7,
**dadurch gekennzeichnet, daß**
der Ausschnitt (22) im Tragrahmen (2) fur den Durchtritt einer als Widerlager einer Rückstellfeder (24) dienenden Nase (25) des Riegelschiebers (13) bemessen ist.

## Claims

1. Locking device to block the actuation of a travelling mechanism of a power circuit breaker which is movably arranged in a module frame (35), the travelling mechanism having a blocking device which can be controlled by the locking device, **characterized in that** the locking device has a flexible transmission member (26, 45) for the actuation of the blocking device of the travelling mechanism and also a closure unit (1) which is connected to the flexible transmission member (26, 45) and comprises a supporting frame (2) which is provided with fastening openings (8, 10, 11) and with guiding openings (16, 20) for a blocking slide (12) which is connected to the transmission member (26, 45), can be operated by hand and has a suspension opening (23) for at least one padlock (43).

2. Locking device according to Claim 1, **characterized in that**
- the supporting frame (2) is of a U-shaped form and has two parallel legs (3, 4) lying opposite each other and also a middle part (5) connecting the legs (3, 4),
- the guiding openings (16, 20) are arranged in the legs (3, 4) lying opposite each other of the supporting frame (2),
- the legs (3, 4) are provided with bevelled edges (6, 7) directed towards each other, and
- the fastening openings (8, 10, 11) are arranged in at least one of the legs (3, 4), in the bevelled edges (6, 7) of the legs (3, 4) and in the middle part (5).

3. Locking device according to Claim 1 or 2, **characterized in that** the blocking slide (12) is assigned a bolt slide (13), which is likewise provided with at least one suspension opening (23) and is guided in further guiding openings (17, 21) of the supporting frame (2), the suspension opening (23) in the bolt slide (13) having to be brought into line with the suspension opening (23) in the blocking slide (12) only when the blocking position of the blocking slide (12) is reached by a displacement in the further guiding openings (17, 21) that is directed transversely with respect to the actuating direction of the blocking slide (12).

4. Locking device according to Claim 2, **characterized in that**, for releasable securement to prevent returning from the position in which it is displaced transversely with respect to the actuating direction of the blocking slide (12) into its position of rest, the bolt slide (13) has a blocking surface (32) serving for passing over a stop surface (33) of the supporting frame (2).

5. Locking device according to Claim 4, **characterized in that**, for displacement together, the blocking slide (12) and the bolt slide (13) are connected by an entrainment means (27).

6. Locking device according to Claim 5, **characterized in that** the entrainment means (27) comprises a pin (28) of the blocking slide (12) or of the bolt slide (13) and a lever portion (30) of the bolt slide (13) or the blocking slide (12) passing over the pin (28) in a fork-like manner.

7. Locking device according to Claim 6, **characterized in that** the blocking slide (12) and the bolt slide (13) are identically formed and placed mirror-invertedly onto each other and **in that** at least the guiding opening (20), located in one of the legs (3) of the supporting frame (2), for the blocking slide (12) and the further guiding opening (21) for the bolt slide (13) are formed by a continuous cutout (22) of the relevant leg (3) in the supporting frame (2).

8. Locking device according to Claim 7, **characterized in that** the cutout (22) in the supporting frame (2) is dimensioned for the passing through of a lug (25) of the bolt slide (13) serving as an abutment of a restoring spring (24).

## Revendications

1. Dispositif de verrouillage destiné à bloquer l'actionnement d'un mécanisme de déplacement d'un disjoncteur monté de manière déplaçable dans un châssis de montage (35), le mécanisme de déplacement présentant un dispositif de blocage pouvant être commandé par le dispositif de verrouillage, **caractérisé en ce que** le dispositif de verrouillage comprend un organe de transmission (26, 45) flexible destiné à actionner le dispositif de blocage du mécanisme de déplacement, ainsi qu'une unité de verrouillage (1 ) qui est reliée à l'organe de transmission (26, 45) flexible et qui englobe un cadre de support (2) pourvu d'ouvertures de fixation (8, 10, 11) et comportant des ouvertures de guidage (16, 20) destinées à un coulisseau de blocage (12) relié à l'organe de transmission (26, 45) flexible, pouvant être manoeuvré à la main et présentant une ouverture d'accrochage (23) pour au moins un cadenas (43).

2. Dispositif de verrouillage selon la revendication 1, **caractérisé en ce que**
- le cadre de support (1 ) est d'une configuration en forme de U et présente deux ailes (3, 4) opposées, parallèles l'une à l'autre, ainsi qu'une partie centrale (5) reliant les deux ailes (3, 4),
- les ouvertures de guidage (16, 20) sont placées dans les ailes (3, 4) opposées du cadre de support (2),
- les ailes (3, 4) sont munies de bords repliés (6, 7) dirigés l'un vers l'autre, et
- les ouvertures de fixation (8, 10, 11) sont placées dans l'une au moins des ailes (3, 4), dans les bords repliés (6, 7) des ailes (3, 4) ainsi que dans la partie centrale (5).

3. Dispositif de verrouillage selon la revendication 1 ou 2, **caractérisé en ce qu'**au coulisseau de blocage (12) est associé un coulisseau d'arrêt (13) également pourvu d'au moins une ouverture d'accrochage (23) et guidé dans d'autres ouvertures de guidage (17, 21) du cadre de support (2), l'ouverture d'accrochage (23) dans le coulisseau d'arrêt (13) pouvant être amenée en recouvrement avec l'ouverture d'accrochage (23) dans le coulisseau de blocage (12) seulement lorsque le coulisseau de blocage (12) a atteint sa position de blocage, par un déplacement de translation dans lesdites autres ouvertures de guidage (17, 21), dirigé transversalement à la direction d'actionnement du coulisseau de blocage (12).

4. Dispositif de verrouillage selon la revendication 2, **caractérisé en ce que** le coulisseau d'arrêt (13) possède une surface de blocage (32) destinée à surmonter une surface de butée (33) du cadre de support (2), pour assurer un arrêt de sécurité, pouvant être interrompu, à l'encontre d'un retour dans sa position de repos à partir de la position décalée par translation transversalement à la direction d'actionnement du coulisseau de blocage (12).

5. Dispositif de verrouillage selon la revendication 4, **caractérisé en ce que** le coulisseau de blocage (12) et le coulisseau d'arrêt (13), dans l'optique de leur déplacement en translation commun, sont reliés par un système d'entraîneur (27).

6. Dispositif de verrouillage selon la revendication 5, **caractérisé en ce que** le système d'entraîneur (27) comprend un tenon (28) du coulisseau de blocage (12) ou respectivement du coulisseau d'arrêt (13), et un tronçon de levier (30) du coulisseau d'arrêt (13) ou respectivement du coulisseau de blocage (12), surmontant le tenon (28) à la manière d'une fourchette.

7. Dispositif de verrouillage selon la revendication 6, **caractérisé en ce que** le coulisseau de blocage (12) et le coulisseau d'arrêt (13) sont d'une configuration identique et sont disposés de manière symétrique inverse l'un sur l'autre, et **en ce qu'**au moins l'ouverture de guidage (20) se trouvant dans l'une des ailes (3) du cadre de support (2) et destinée au coulisseau de blocage (12), et l'autre ouverture de guidage (21) pour le coulisseau d'arrêt (13) sont formées par une encoche (22) commune de l'aile (3) considérée du cadre de support (2).

8. Dispositif de verrouillage selon la revendication 7, **caractérisé en ce que** l'encoche (22) dans le cadre de support (2) est dimensionnée pour le passage d'une languette (25) du coulisseau d'arrêt (13), servant de butée de support pour un ressort de rappel (24).
